(19) Europäisches Patentamt

European Patent Office

Office européen des brevets

(11) **EP 3 608 509 B1**

(12) **EUROPEAN PATENT SPECIFICATION**

(45) Date of publication and mention
of the grant of the patent:
**17.04.2024 Bulletin 2024/16**

(21) Application number: **19189307.2**

(22) Date of filing: **31.07.2019**

(51) International Patent Classification (IPC):
**F01D 5/28** (2006.01)  **F01D 15/12** (2006.01)
**F01D 25/12** (2006.01)  **F02C 3/107** (2006.01)
**F02K 3/06** (2006.01)

(52) Cooperative Patent Classification (CPC):
**F01D 15/12; F01D 5/282; F01D 25/12; F02C 3/107;**
**F02K 3/06;** F05D 2220/3212; F05D 2220/3213;
F05D 2260/40311; F05D 2300/6033; Y02T 50/60

(54) **GAS TURBINE ENGINE WITH CERAMIC MATRIX COMPOSITE TURBINE COMPONENTS**

GASTURBINENTRIEBWERK MIT TURBINENKOMPONENTEN AUS
KERAMIKMATRIXVERBUNDSTOFF

MOTEUR DE TURBINE À GAZ AVEC COMPOSANTS DE TURBINE EN COMPOSITE À MATRICE
CÉRAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2018 GB 201813080**

(43) Date of publication of application:
**12.02.2020 Bulletin 2020/07**

(73) Proprietor: **Rolls-Royce plc**
**London N1 9FX (GB)**

(72) Inventors:
• **Whittle, Michael**
 **Derby, Derbyshire DE24 8BJ (GB)**

• **Dunning, Pascal**
 **Derby, Derbyshire DE24 8BJ (GB)**
• **Townes, Roderick**
 **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
**EP-A- 3 354 889**    **US-A1- 2012 301 312**
**US-A1- 2013 224 049**    **US-A1- 2014 283 500**
**US-A1- 2016 186 583**    **US-A1- 2016 215 645**
**US-A1- 2018 119 619**

EP 3 608 509 B1

**Description**

The present disclosure relates to an efficient gas turbine engine. Aspects of the present disclosure relate to a gas turbine having a fan driven via a gearbox and a highly efficient engine core.

The design of a gas turbine engine must balance a number of competing factors. In general, it is desirable to minimize fuel burn and weight. However, gas turbine engines have been used and developed for many years, and so the underlying designs are mature. This high level of design maturity means that advances in, for example, the reduction of fuel burn and/or weight have been relatively small and incremental over recent years.

It is desirable to improve the rate of development of gas turbine engines.

US patent application US2014283500 discloses a turbofan engine which includes a gas generator section for generating a gas stream flow with higher energy per unit mass flow than that contained in the ambient air and a power turbine that converts the gas stream flow into shaft power. The turbofan engine further includes a propulsor section including a fan driven by the power turbine through a geared architecture at a second speed lower than the first speed for generating propulsive thrust as a mass flow rate of air through a bypass flow path. An Engine Unit Thrust Parameter defined as net engine thrust divided by a product of the mass flow rate of air through the bypass flow path, a tip diameter of the fan and the first rotational speed of the power turbine is less than about 0.15 at a take-off condition.

US patent application US2018119619 discloses a gas turbine engine for an aircraft which includes a compressor section where at least one of the airfoil members defines a vane exit vector extending tangentially from a curved surface of the airfoil member adjacent a trailing edge of the airfoil member, a projection of the vane exit vector in a longitudinal plane perpendicular to a radial direction of the engine extending at an airfoil angle from the longitudinal axis. A bleed slot defined through the casing wall and providing fluid communication between the core air passage and the bleed duct extends along a slot axis. A projection of the slot axis in the longitudinal plane extends at a slot angle with respect to the longitudinal axis. The slot angle is different from the airfoil angle.

European patent application EP 3354889 discloses a turbofan engine including a fan having a plurality of rotatable fan blades and defining a fan pressure ratio during operation of the turbofan engine. The turbofan engine also includes a turbomachine operably coupled to the fan for driving the fan, the turbomachine including a compressor section, a combustion section, and a turbine section in serial flow order and together defining a core air flowpath. The turbofan also includes an outer nacelle at least partially surrounding the fan and the turbomachine, the outer nacelle defining a bypass passage with the turbomachine. A bypass ratio of an amount of airflow through the bypass passage to an amount of airflow through the core air flowpath during operation of the turbofan is less than or equal to about 11 and wherein the fan pressure ratio is less than or equal to about 1.5.

US patent application US 2012301312 discloses a Ceramic Matrix Composite (CMC) airfoil segment for a gas turbine engine which includes a box-shape fibre geometry which defines a rectilinear pressure side bond line and a rectilinear suction side bond line.

US patent application US 2016215645 discloses a gas turbine engine which includes an engine case, a retention block attached to the engine case, and a blade outer air seal (BOAS). The BOAS includes a plurality of layers formed of a ceramic matrix composite (CMC) material. At least one of the plurality of layers provides a slot receiving a portion of the retention block.

United States patent application US 2016186583 discloses a gas turbine engine airfoil assembly including an airfoil and an attachment structure respectively bonded to opposing sides of a platform. At least one of the airfoil, the platform and the attachment structure are constructed from a ceramic matrix composite.

US patent application US 2013224049 discloses a gas turbine engine which includes a shaft defining an axis of rotation and a fan driving turbine configured to drive the shaft. The fan driving turbine comprises a plurality of stages that are spaced apart from each other along the axis. Each stage includes a turbine disk comprised of a disk material and a plurality of turbine blades comprised of a blade material. The disk material and the blade material for one of the plurality of stages is selected based on a location of the one stage relative to the other stages of the plurality of stages.

According to an aspect, there is provided a gas turbine engine for an aircraft comprising:

an engine core comprising:

a turbine, a combustor, and a compressor, the turbine comprising a first turbine and a second turbine and the compressor comprising a first compressor and a second compressor;

a first core shaft connecting the first turbine to the first compressor;

a second core shaft connecting the second turbine to the second compressor, the second turbine, second compressor, and second core shaft being arranged to rotate at a higher rotational speed than the first core shaft, the gas turbine engine further comprising:

a bypass duct radially outside the engine core;

a fan comprising a plurality of fan blades; and

a gearbox that receives an input from the first core shaft (26) and outputs drive to the fan so as to drive the fan at a lower rotational speed than the first core shaft,

wherein:

part of the flow that enters the engine core bypasses the combustor and is used as turbine cooling flow to cool the turbine;

the fan diameter is greater than 225cm;

at cruise conditions, the cooling to bypass flow efficiency ratio defined as the ratio of the mass flow rate of the turbine cooling flow to the mass flow rate of the bypass flow at engine cruise conditions is not greater than 0.02; and

the turbine entry temperature defined as the temperature at the inlet to the most axially upstream turbine rotor at a maximum power condition of the gas turbine engine, is at least 1800K; characterised in that

the second turbine comprises first and second rotor blade and stator vane rows wherein the most axially upstream row of stator vanes and rotor blades of the second turbine are metallic, whilst the second most axially upstream row of stator vanes and rotor blades of the second turbine are manufactured using Ceramic Matrix Composites (CMCs).

The cooling to bypass efficiency ratio may be in the range of from 0.005 to 0.02. The cooling to bypass efficiency ratio may be in a range having a lower bound of 0.005, 0.006, 0.007 or 0.008, and an upper bound of 0.012, 0.013, 0.014, 0.015, 0.016, 0.017, 0.018, 0.019 or 0.02.

The cooling to bypass efficiency ratio is defined as the ratio of the mass flow rate of the turbine cooling flow to the mass flow rate of the bypass flow at engine. The ratio may be defined at engine cruise conditions.

The present inventors have found that providing a gas turbine engine with a cooling to bypass efficiency ratio as defined herein - which is lower than conventional engines - may provide a particularly efficient gas turbine engine.

Purely by way of example, one way of achieving such a cooling to bypass ratio is through the optimal use of ceramic matrix composites in a gas turbine engine having a fan which is driven from a turbine via a reduction gearbox.

The first and/or second turbine comprises at least one ceramic matrix composite component. The second turbine comprises at least one ceramic matrix composite component, which may be in the range of from 2% to 15% of the total mass of the second turbine

Conventionally, components in a turbine section of a gas turbine engine have been manufactured using a metal alloy, such as a nickel alloy. However, in order to achieve greater engine efficiency, it has been found to be desirable to increase the temperature of the core gas flow entering into the turbine from the combustor. Typically, in operation, the temperature of the gas flowing past some of the components in the turbine is near to or above the melting point of those components. Thus, in order to ensure that such components have sufficient operating life, they require significant cooling. Such cooling is typically provided using air from the compressor that bypasses the combustor. The cooling flow that bypasses the combustor results in reduced engine efficiency, because that flow is simply compressed in the compressor and then expanded through the turbine.

Furthermore, in order to minimize the amount of cooling flow that is used, and thus minimize the impact on engine efficiency, the cooling flow must be used as efficiently as possible. For example, the cooling passages used to cool such turbine components are typically intricate, requiring extensive design and complex manufacturing techniques. This significantly increases the cost of the gas turbine engine.

Still further, the cooling system itself adds mass to the engine.

Selective use of ceramic matrix composites (CMCs) in its turbine may be advantageous. For example, CMC use may not actually be appropriate in all areas. Through this understanding, the inventors have derived the optimum level of CMC use in the turbine to be in the claimed ranges. For example, whilst the thermal capability of CMCs - which is typically higher than their metallic counterparts - may lend itself to use in some areas, the reduced thermal conductivity of CMCs (compared to an equivalent metallic component) means that they may not be suitable in some other areas. Purely by way of non-limitative example, the very hottest parts of the turbine may experience temperatures that exceed even the capability of CMCs, and thus still require a degree of cooling flow. In such a case, it may be more appropriate to use a metal than a CMC, due to the greater thermal conductivity of metals potentially improving the effectiveness of the cooling flow in removing heat from the component.

Purely by way of example, where used, the CMC may be SiC-SiC (i.e. silicon carbide fibres in a silicon carbide matrix). However, it will be appreciated that any suitable CMC may be used, and indeed the turbine may comprise more than one composition of CMC (for example having different elements). Any suitable manufacturing method may be used for the CMC, such as a vapour deposition process or a vapour infusion process.

The turbine comprises stator vanes, rotor blades, and may comprise seal segments (which together may be said to form a generally annular ring radially outside the rotor blades), rotor discs (on which rotor blades are provided), one or more radially inner casing elements and one or more radially outer casing elements. The turbine mass may be the total mass of all such turbine components.

The minimum mass of ceramic matrix composite in the second turbine may be 1%, 2%, 3%, 4%, 5%, 6%, 7%, 8%, 9% or 10% of the total mass of the second turbine. The maximum mass of ceramic matrix composite in the second turbine may be 20%, 15%, 14%, 13%, 12%, 11%, 10%, 9%, 8%, 7%, 6% or 5% of the total mass of the second turbine. The mass of ceramic matrix composite in the second turbine as a percentage of the total mass of the second turbine may be in a range having any of the minimum percentages listed above as a lower bound and any compatible maximum percentage listed above as an upper bound.

The second turbine is axially upstream of the first turbine. The first turbine may comprise at least one ceramic matrix composite component. In arrangements including CMCs, the mass of ceramic matrix composite in the first and second turbines may be in the range of from 1% to 15%, optionally 2% to 12%, of the total mass of the first and second turbines.

The minimum mass of ceramic matrix composite in the first and second turbines may be 1%, 2%, 3%, 4%, 5%, 6%, 7%, 8%, 9% or 10% of the total mass of the first and second turbines. In arrangements including CMCs, the maximum mass of ceramic matrix composite in the first and second turbines may be 20%, 15%, 14%, 13%, 12%, 11%, 10%, 9%, 8%, 7%, 6% or 5% of the total mass of the first and second turbine. The mass of ceramic matrix composite in the first and second turbines as a percentage of the total mass of the first and second turbines may be in a range having any of the minimum percentages listed above as a lower bound and any compatible maximum percentage listed above as an upper bound.

As noted above, the percentages of CMCs used in the turbine described and claimed herein are based on insight into the most appropriate components for which to use CMCs, taking into account, inter alia, the temperature variation though the turbine. Non-limitative examples are provided below of metallic and CMC components in the gas turbine engine

The second turbine comprises at least two rows of stator vanes. The most axially upstream row of stator vanes is metallic. The most axially upstream row of stator vanes may be directly downstream of the combustor. For example, there may be no rotor blades between the combustor and the stator vanes.

The terms "upstream" and "downstream" are used herein in the conventional manner, i.e. with respect to the flow through the engine in normal use. Thus, for example, the compressor and combustor are in the upstream direction relative to the turbine.

The second turbine comprises at least two rows of rotor blades. The most axially upstream row of rotor blades is metallic. The most axially upstream row of rotor blades may be directly downstream of the most axially upstream row of stator vanes.

The most axially upstream row of rotor blades and/or the most axially upstream row of stator vanes may comprise one or more internal cooling passages and/or film cooling holes, for example where the blades and/or vanes are metallic. Such internal cooling passages and/or film cooling holes may be supplied with cooling flow from the compressor that has bypassed the combustor.

A CMC component may or may not be provided with internal cooling passages and/or film cooling holes.

The most axially upstream row of rotor blades in the turbine is a part of the second turbine. The most axially upstream row of stator vanes in the turbine may be a part of the second turbine.

The most axially upstream row of rotor blades in the turbine may be radially surrounded by seal segments. Such seal segments may comprise a ceramic matrix composite.

In general, the seal segments may form the radially outer boundary (which may be annular and/or frusto-conical) inside which the turbine blades rotate in use. The radially outer tips of the turbine blades may be adjacent the radially inner surface of the seal segments.

The second turbine comprises at least two rows of stator vanes. The second most axially upstream row of stator vanes (which may be directly axially downstream of the upstream most row of rotor blades) comprise a ceramic matrix composite.

The second turbine comprises at least two rows of rotor blades. The second most axially upstream row of rotor blades comprises a ceramic matrix composite.

The second most axially upstream row of rotor blades in the turbine is a part of the second turbine. The second most axially upstream row of stator vanes in the turbine is a part of the second turbine.

The second most axially upstream row of rotor blades may be radially surrounded by ceramic matrix composite seal segments.

The second turbine comprises at least two stator vane rows (for example 2, 3, 4, 5 or 6), and one or more of which comprises a ceramic matrix composite. The second turbine comprises at least two rotor blade rows and/or surrounding seal segments (for example 2, 3, 4, 5 or 6), and one or more of which comprises a ceramic matrix composite.

The axially most upstream row of stator vanes in the first turbine (which may be directly downstream of the axially most downstream row of rotor blades in the second turbine) may comprise a ceramic matrix composite.

The axially most upstream row of rotor blades in the first turbine may comprise a ceramic matrix composite. The axially most upstream row of rotor blades in the first turbine may be surrounded by ceramic matrix composite seal segments.

In any aspect of the present disclosure, any one or more rotor blade, stator vane or seal segment (i.e. seal portion that forms at least a part of the radially outer flow path around a row of rotor blades) that experiences a maximum temperature a maximum power condition at which the engine is certified (which may be commonly known as the "redline" condition) in the range of from 1800 to 2200K - for example in a range having a lower bound of 1800K and an upper bound of 1900K, 2000K, 2100K or 2200K - may be manufactured using a CMC. In some arrangements, most, rotor blades experiencing "red-line" temperatures within such ranges may be manufactured using a CMC. In some arrangements, most stator vanes experiencing "red-line" temperatures within such ranges may be manufactured using a CMC. In some arrangements, most, or even all, seal segments experiencing "red-line" temperatures within such ranges may be manufactured using a CMC. Rotor blades, stator vanes and seal segments that do not experience "red-line" temperatures in such ranges may be manufactured using a metal, such as a nickel alloy.

As used herein, the turbine entry temperature, which may be referred to as TET, is defined as the maximum temperature at entry to the most axially upstream rotor stage of the turbine measured at a maximum power condition. The maximum power condition may be the maximum power condition at which the engine is certified, and may represent the maximum temperature at that location during operation of the engine. Such a condition is commonly referred to as a "red-line" condition. Such a condition may occur, for example, at a high thrust condition, for example at a maximum take-off (MTO) condition. The TET (which may be referred to as the maximum TET) in use of the engine may be particularly high, for example, at least (or on the order of) any of the following: 1800K, 1850K, 1900K, 1950K, 2000K, 2050K or 2100K. The maximum TET may be in an inclusive range bounded by any two of the values in the previous sentence (i.e. the values may form upper or lower bounds). It will be appreciated that this maximum power condition at which the maximum TET is measured is the same as the condition as that at which the max net thrust at sea level, or maximum thrust, (as referred to anywhere herein) is measured.

As noted elsewhere herein, the present disclosure relates to a gas turbine engine. Such a gas turbine engine comprises an engine core comprising a turbine, a combustor, a compressor, and a core shaft connecting the turbine to the compressor. Such a gas turbine engine comprises a fan (having fan blades) located upstream of the engine core.

As noted elsewhere herein, the gas turbine engine comprises a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have two or three shafts that connect turbines and compressors. The turbine connected to the core shaft that drives the gearbox is a first turbine, the compressor connected to the core shaft that drives the gearbox is a first compressor, and the core shaft that drives the gearbox is a first core shaft. The engine core further comprises a second turbine, a second compressor, and a second core shaft connecting the second turbine to the second compressor. The second turbine, second compressor, and second core shaft are arranged to rotate at a higher rotational speed than the first core shaft.

In such an arrangement, the second compressor is positioned axially downstream of the first compressor. The second compressor is arranged to receive (for example directly receive, for example via a generally annular duct) flow from the first compressor.

The gearbox is arranged to be driven by the core shaft that is configured to rotate (for example in use) at the lowest rotational speed (for example the first core shaft in the example above).

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4, for example on the order of or at least 3, 3.1, 3.2, 3.3, 3.4, 3.5, 3.6, 3.7, 3.8, 3.9, 4.0, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor is provided axially downstream of the fan and compressor(s). The combustor is provided upstream of the turbine(s).

Each compressor may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The first turbine may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 225cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches) or 400cm. The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity $U_{tip}$. The work done by the fan blades on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg$^{-1}$s, 105 Nkg$^{-1}$s, 100 Nkg$^{-1}$s, 95 Nkg$^{-1}$s, 90 Nkg$^{-1}$s, 85 Nkg$^{-1}$s or 80 Nkg$^{-1}$s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance-between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a schematic showing an enlarged view of an upstream portion of the turbine of the gas turbine engine.

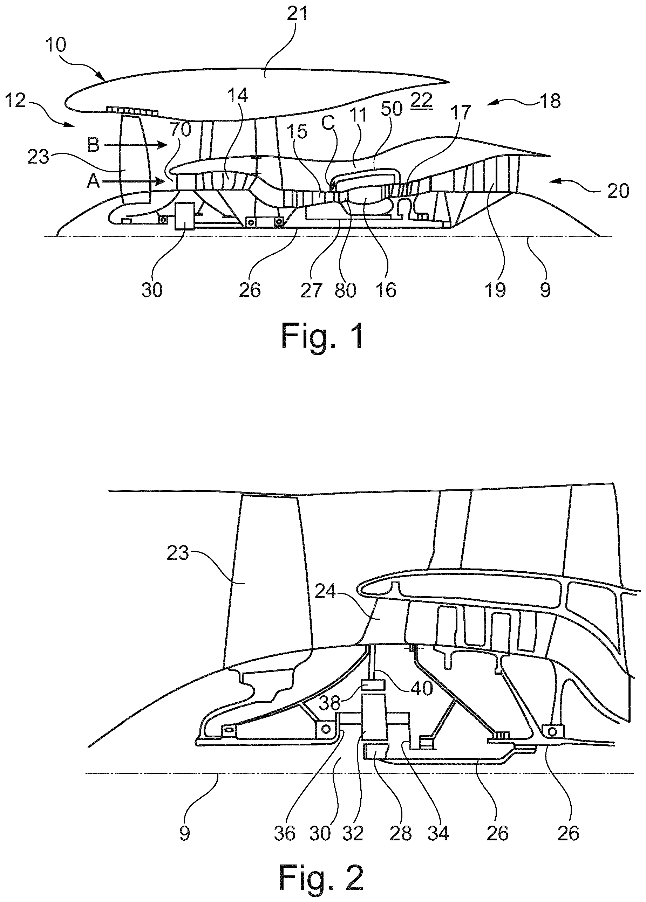

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14 (which may be referred to herein as a first compressor 14), a high-pressure compressor 15 (which may be referred to herein as a second compressor), combustion equipment 16, a high-pressure turbine 17 (which is referred to herein as a second turbine), a low pressure turbine 19 (which is referred to herein as a first turbine) and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

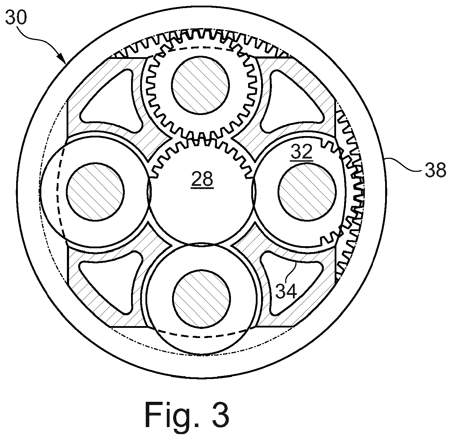

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

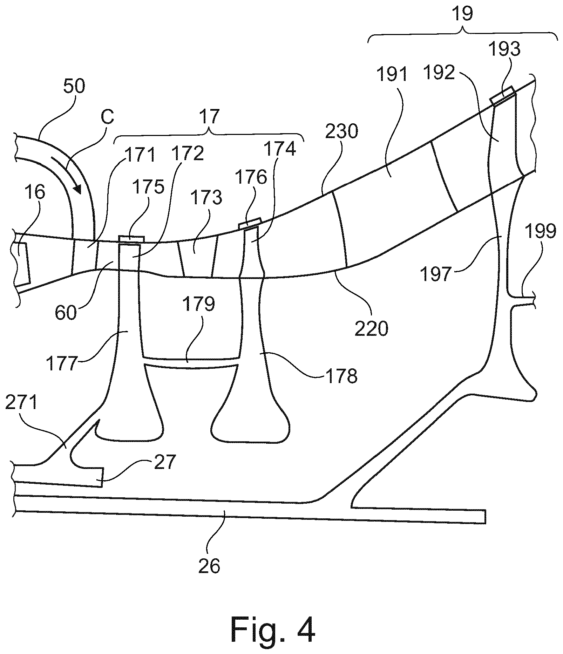

Figure 4 shows a part of the turbine in greater detail. In particular, Figure 4 shows a downstream portion of the combustor 16, the second (high pressure) turbine 17, and an upstream portion of the first (low pressure) turbine 19. The high pressure turbine 17 is connected to the second core shaft 27. The low pressure turbine 19 is connected to the first core shaft 26.

In the illustrated example, the high pressure turbine 17 comprises, in axial-flow series, a first (most axially upstream) stator vane row 171, a first (most axially upstream) rotor blade row 172, a second (second most axially upstream) stator vane row 173, and a second (second most axially upstream) rotor blade row 174.

The first rotor blade row 172 is connected to a rotor disc 177. The second rotor blade row 174 is connected to a rotor disc 178. The two rotor discs 177, 178 are rigidly connected together by a link member 179. At least one of the rotor discs (in the illustrated example the first rotor disc 177) is connected to the second core shaft 27 via an arm 271. Accordingly, in use, the second core shaft 27, rotor discs 177, 178 and rotor blades 172, 174 all rotate together, at the same rotational speed.

The gas turbine engine 10 also comprises seal segments 175 provided radially outside the first rotor blade row 172. The gas turbine engine 10 also comprises seal segments 176 provided radially outside the second rotor blade row 174. The seal segments 175, 176 form the radially outer flow boundary (which may be referred to as the radially outer annulus line) in the region of the respective rotor blade row 172, 174, for example over the axial extent of the tips of the rotor blades 172, 174. The seal segments 175, 176 may form a seal with the tips of the rotor blades to prevent - or at least restrict - flow passing over or past the tips of the rotor blades. The seal segments 175, 176 may be abradable by the rotor blades. Thus, for example, the seal segments 175, 176 may be abraded by the rotor blades in use so as to form an optimal seal therebetween. Each segment may form an annular segment or a frusto-conical segment.

In the illustrated example, the high pressure turbine 17 is a two-stage high pressure turbine, in that it comprises two stages of vanes and blades, each stage comprising a stator vane row followed by a rotor blade row. However, it will be appreciated that gas turbine engines 10 in accordance with the present disclosure may comprise a high pressure turbine with any number of stages, for example 1, 2, 3, 4, 5 or more than 5 stages of stator vanes and rotor blades.

The low pressure turbine 19 is provided downstream of the high pressure turbine 17. An axially most upstream row of stator vanes 191 in the low pressure turbine 19 is provided immediately downstream of the final row of rotor blades 174 of the high pressure turbine 17. An axially most upstream row of rotor blades 192 in the low pressure turbine 19 is provided immediately downstream of the axially most upstream row of stator vanes 191. The axially most upstream row of rotor blades 192 is connected to the first core shaft 26 via a rotor disc. In use, the rotor blades 192 of the low pressure turbine 19 drive the first core shaft 26, which in turn drives the low pressure compressor 14, and also drives - via a gearbox 30 - the fan 23.

Figure 4 only shows an upstream portion of the low pressure turbine 19. However, it will be appreciated that downstream of the illustrated portion there may be provided further rows of stator vanes and rotor blades. For example, the low pressure turbine 19 may comprise 1, 2, 3, 4, 5 or more than 5 stages of stator vanes and rotor blades. The axially most upstream row of rotor blades 192 are connected to one or more (not shown) downstream rotor blade rows via a linkage 199 that is connected to the disc 197 on which the rotor blades 192 are supported.

At least a part of the high pressure turbine 17 and the low pressure turbine 19 comprises a CMC in the illustrated example. Purely by way of example, the CMC material may be silicon carbide fibres and/or a silicon carbide matrix (SiC-SiC), although it will be appreciated that other CMCs may be used, such as an oxide-oxide (Ox-Ox CMC material), a monolithic ceramic, and/or the like.

As noted elsewhere herein, CMCs have different properties to conventional turbine materials, such as nickel alloys. For example, CMCs typically have lower density and are able to withstand higher temperatures than metals such as nickel alloys. The present inventors have understood that these properties can be useful in some areas of the turbine 17, 19, but other properties - such as lower thermal conductivity of CMCs compared to nickel alloys - mean that their use is not appropriate in all areas of the turbine 17, 19.

According to the invention, the second (second most axially upstream) stator vane row 173, and second (second most axially upstream) rotor blade row 174 of the high pressure turbine are manufactured using CMCs. The first or second set of seal segments 175, 176 of the high pressure turbine may be manufactured using CMCs. The first (most axially upstream) stator vane row 171 and the first (most axially upstream) rotor blade row 172 of the second turbine are manufactured using a metal, such as a nickel alloy. Optionally, in any aspect or arrangement described and/or claimed herein and regardless of the number of stages in the high pressure turbine 17, the rotor blades of each stage in the high pressure turbine 17 may be surrounded by seal segments, and the seal segments surrounding any one or more stage (for example all stages) may be made from a CMC.

In the Figure 4 arrangement, the second stator vane row 173, second rotor blade row 174 and first set of seal segments 175 and second set of seal segments 176 of the high pressure turbine are manufactured using CMCs, whereas the first stator vane row 171 and the first rotor blade row 172 are manufactured using a nickel alloy. In this particular example, the temperature experienced by the first stator vane row 171 and the first rotor blade row 172 may be even higher than that which can be tolerated by CMCs. Accordingly, for this particular example, this means that the first stator vane row 171 and the first rotor blade row 172 - which experience higher temperatures than downstream components due to their proximity to the combustor exit 16 - can take advantage of the relatively high thermal conductivity of the nickel alloy so as to be cooled more effectively using cooling air (taken from the compressor, for example) which may be provided to passages running through the components.

The total mass of the high pressure turbine 17 may include the masses of the stator vanes 171, 173, rotor blades 172, 174, seal segments 175, 176, rotor discs 177, 178, one or more radially inner casing elements that form the inner flow boundary 220 over the axial extent of the high pressure turbine 17, and one or more radially outer casing elements that form the outer flow boundary 230 over the axial extent of the high pressure turbine 17.

CMCs may be used in appropriate parts of the low pressure turbine 19, although in some engines 10 their use in the low pressure turbine 19 may not be appropriate, and thus they may not be used. Purely by way of non-limitative example, in the Figure 4 arrangement, the axially most upstream row of stator vanes 191 is manufactured using a CMC, whereas the axially most upstream row of rotor blades 192 is manufactured using a metal alloy (such as a nickel alloy). In this particular example, the temperature experienced by the axially most upstream row of rotor blades 192 may not be sufficiently high to benefit from the use of CMCs, although it will be appreciated that in other engines 10 in accordance with the present disclosure, the axially most upstream row of rotor blades 192 and/or the associated seal segments 193 may be manufactured using CMCs. Indeed, in some engines, components (such as vanes, blades and seals) downstream of the axially most upstream row of rotor blades 192 in the low pressure turbine 19 may be manufactured using CMCs.

Any component manufactured using CMCs may also be provided with an environmental barrier coating (EBC).

Such an EBC may cover at least the gas washed surface of such components. Such an EBC may protect the CMC from environmental deterioration, for example deterioration due to the effects of water vapour. Such an EBC may be, for example ytterbium disilicate ($Yb_2Si_2O_7$), which may be applied by any suitable method, such as air plasma spray.

As noted elsewhere herein, CMCs have a higher temperature capability than conventional materials, such as metal alloys. This means that selective use of CMCs in the turbine can mean that some components that would need to be cooled if they were to be made from a metal alloy do not need to be cooled because they are made from a CMC and/or some components manufactured using a CMC require less cooling than if they were to be made from a metal alloy. Additionally or alternatively, through use of CMCs it may be possible to expose some components to a higher temperature than would otherwise be possible.

Purely by way of non-limitative example, optimizing the use of CMCs in the engine (for example in one or more components of the turbine 17, 19 as described herein) may reduce the cooling flow C requirement, which may result in a more efficient engine core (because less flow is bypassing the combustor), meaning that for a given amount of core power, the mass flow entering the core can be reduced and/or the size and/or mass of the turbine(s) 17, 19 can be reduced.

Figures 1 and 4 schematically show turbine cooling apparatus 50. The turbine cooling apparatus extracts cooling flow C from the compressor 14, 15. The cooling flow C bypasses the combustor 16. The cooling flow C is then delivered to the high pressure turbine 17 and optionally the low pressure turbine 19. Although the turbine cooling apparatus 50 is shown in Figures 1 and 4 as extracting cooling flow C from a specific position in the high pressure compressor 15 and delivering it to a specific position in the high pressure turbine 17, it will be appreciated that this is merely for ease of schematic representation, and that the cooling flow C may be extracted from any suitable locations (for example multiple locations in the high pressure compressor 15 and/or the low pressure compressor 14) and delivered to any desired locations (for example multiple locations in the high pressure turbine 17 and/or the low pressure turbine 19).

A reduction in the amount of cooling flow C is desirable, because the cooling flow is not combusted and thus the amount of work that can be extracted from it is lower than for the flow that passes through the combustor 16. With reference to Figure 1, the gas turbine engine 10 has a bypass ratio defined as the mass flow rate of the flow B through the bypass duct 22 divided by the mass flow rate of the flow A entering the engine core at cruise conditions. As the bypass ratio is increased - for example to increase engine efficiency - proportionally less flow A goes through the core. This means that for a given size of engine and/or to be able to withstand a given turbine entry temperature, a higher proportion of the core flow A may be required to be used as turbine cooling flow C. In this regard, as used herein, turbine entry temperature ($T0turb\_in$) may be the maximum stagnation temperature measured at a position 60 in the gas flow path that is immediately upstream of the most axially upstream rotor blade row 172, i.e. at a so-called "red-line" operating condition of the engine at which the engine is certified.

A cooling to bypass efficiency ratio may be defined as the ratio of the mass flow rate C of the turbine cooling flow to the mass flow rate B of the bypass flow at cruise conditions. Using an understanding of the constraints and/or technologies described by way of example herein, the cooling to bypass efficiency ratio may be optimized to be as described and/or claimed herein. Additionally or alternatively, the mass of the high pressure turbine 17 and/or the low pressure turbine 19 may be optimized (for example reduced) relative to a conventional engine. In turn, this may reduce the mass of the high pressure turbine 17 and/or the low pressure turbine 19 as a proportion of the overall mass of the gas turbine engine 10.

Using an understanding of the constraints and/or technologies described by way of example herein, the normalized thrust may be optimized. In this regard, the normalized thrust is defined as the maximum net thrust of the engine 10 at sea level divided by the total mass of the turbines 17, 19 in the engine 10. The illustrated example has a high pressure turbine 17 and a low pressure turbine 19, however, it will be appreciated that where further turbines are included in the engine the total turbine mass includes the mass of all turbines.

As noted elsewhere herein, the optimized use of CMCs may result in a reduced turbine cooling flow requirement. Additionally or alternatively, through use of CMCs it may be possible to expose some components to a higher temperature than would otherwise be possible. This may result in the ability to increase the turbine entry temperatures relative to engines 10 that do not include optimized use of CMCs. In this regard, it has been found that higher turbine entry temperatures are desirable from an engine efficiency perspective.

Using an understanding of the constraints and/or technologies described by way of example herein, the cooling efficiency ratio may be optimized. In this regard, the cooling efficiency ratio is defined as the ratio between the turbine entry temperature (as defined elsewhere herein) and the cooling flow requirement. The cooling flow requirement may be defined as the mass flow rate of the turbine cooling flow C divided by the mass flow rate of the flow A entering the engine core at cruise conditions.

A core size CS may be defined for the gas turbine engine 10 as:

$$CS = Wcomp_{in}.\frac{\sqrt{T0comp\_out}}{P0comp\_out}$$

where:

Wcomp_in is the mass flow rate (kg/s) at entry to the engine core, i.e. the mass flow rate of the core flow A measured at position 70 in Figure 1;

T0comp_out is the stagnation temperature (K) at exit to the compressor, i.e. at exit of the highest pressure compressor 15, indicated by position 80 in Figure 1;

P0comp_out is the stagnation pressure (Pa) at exit to the compressor i.e. at exit of the highest pressure compressor 15, indicated by position 80 in Figure 1.

Using an understanding of the constraints and/or technologies described by way of example herein may allow a thrust to core efficiency ratio TC and/or a fan to core efficiency ratio FC to be optimised to be in the ranges described and/or claimed herein, where the thrust to core efficiency ratio TC and the fan to core efficiency ratio FC are as defined below (with *T0turb_in* being the turbine entry temperature at position 60 shown in Figure 4, as described above).

$$TC = (Max\ Net\ Thrust\ at\ Sea\ Level).\frac{\sqrt{T0turb\_in}}{CS}$$

$$FC = (Fan\ Diameter).\frac{\sqrt{T0turb\_in}}{CS}$$

It will be appreciated that the understanding and/or technology described and/or claimed herein results in a particularly efficient gas turbine engine 10. For example, the understanding and/or technology described and/or claimed herein may provide a particularly efficient gas turbine engine 10 in which a fan 23 that is driven by a gearbox 30 is complemented by an optimized engine core.

It will be understood that the invention is not limited to the embodiments above-described and various modifications and improvements can be made without departing from the scope of the invention as defined by the appended claims.

**Claims**

1.   A gas turbine engine (10) for an aircraft comprising:

   an engine core (11) comprising:

      a turbine (17, 19), a combustor (16), and a compressor (14, 15), the turbine comprising a first turbine (19) and a second turbine (17) and the compressor comprising a first compressor (14) and a second compressor (15);
      a first core shaft (26) connecting the first turbine to the first compressor;
      a second core shaft (27) connecting the second turbine to the second compressor, the second turbine, second compressor, and second core shaft being arranged to rotate at a higher rotational speed than the first core shaft, the gas turbine engine further comprising:

   a bypass duct radially outside the engine core;
   a fan (23) comprising a plurality of fan blades; and
   a gearbox (30) that receives an input from the first core shaft (26) and outputs drive to the fan so as to drive the fan at a lower rotational speed than the first core shaft,
   wherein:

part of the flow (C) that enters the engine core bypasses the combustor and is used as turbine cooling flow to cool the turbine;

the fan diameter is in the range of from 225cm to 400cm;

at cruise conditions, the cooling to bypass flow efficiency ratio defined as the ratio of the mass flow rate of the turbine cooling flow to the mass flow rate of the bypass flow at engine cruise conditions is not greater than 0.02; and

the turbine entry temperature defined as the temperature at the inlet to the most axially upstream turbine rotor at a maximum power condition of the gas turbine engine, is at least 1800K; **characterised in that** the second turbine (17) comprises first and second rotor blade and stator vane rows, wherein the most axially upstream row of stator vanes (171) and rotor blades (172) of the second turbine (17) are metallic, whilst the second most axially upstream row of stator vanes (173) and rotor blades (174) of the second turbine (17) are manufactured using Ceramic Matrix Composites (CMCs).

2. A gas turbine engine according to claim 1, wherein the cooling to bypass efficiency ratio is in the range of from 0.005 to 0.02.

3. A gas turbine engine according to claim 1 or claim 2, wherein the mass of ceramic matrix composite in the second turbine is in the range of from 2% to 15% of the total mass of the second turbine

4. A gas turbine engine (10) for an aircraft according to any of the preceding claims, wherein:
the first turbine comprises at least one ceramic matrix composite component.

5. A gas turbine engine (10) according to any one of the preceding claims, wherein:

the second turbine (17) comprises at least two rows of rotor blades (172), the most axially upstream row of rotor blades being radially surrounded by seal segments (175); and
the seal segments comprise a ceramic matrix composite.

6. A gas turbine engine (10) for an aircraft according to claim 1, wherein:
the second most axially upstream row of rotor blades of the second turbine (17) is radially surrounded by ceramic matrix composite seal segments.

7. A gas turbine engine according to any one of the preceding claims, wherein the turbine entry temperature is at least 1850K.

8. A gas turbine engine according to any one of the preceding claims, wherein:
the fan diameter is in the range of from 250cm to 280cm.

**Patentansprüche**

1. Gasturbinentriebwerk (10) für ein Luftfahrzeug, umfassend:
einen Triebwerkskern (11), umfassend:

eine Turbine (17, 19), eine Brennkammer (16) und einen Verdichter (14, 15), wobei die Turbine eine erste Turbine (19) und eine zweite Turbine (17) umfasst und der Verdichter einen ersten Verdichter (14) und einen zweiten Verdichter (15) umfasst;
eine erste Kernwelle (26), die die erste Turbine mit dem ersten Verdichter verbindet;
eine zweite Kernwelle (27), die die zweite Turbine mit dem zweiten Verdichter verbindet, wobei die zweite Turbine, der zweite Verdichter und die zweite Kernwelle so angeordnet sind, dass sie sich mit einer höheren Drehzahl als die erste Kernwelle drehen, wobei das Gasturbinentriebwerk ferner Folgendes umfasst:

einen Nebenstromkanal radial außerhalb des Triebwerkskerns;
einen Fan (23), der eine Vielzahl von Fanlaufschaufeln umfasst; und
ein Getriebe (30), das eine Eingabe von der ersten Kernwelle (26) aufnimmt und Antrieb an den Fan abgibt, um den Fan mit einer niedrigeren Drehzahl als die erste Kernwelle anzutreiben, wobei:

ein Teil des Stroms (C), der in den Triebwerkskern eintritt, die Brennkammer umgeht und als Turbinenkühlstrom zum Kühlen der Turbine verwendet wird;

der Fandurchmesser im Bereich von 225 cm bis 400 cm liegt;

bei Reiseflugbedingungen das Kühl- zu Nebenstromeffizienzverhältnis, definiert als das Verhältnis des Massendurchsatzes des Turbinenkühlstroms zum Massendurchsatz des Nebenstroms bei Triebwerksreiseflugbedingungen, nicht größer als 0,02 ist; und

die Turbineneintrittstemperatur, definiert als die Temperatur am Einlass des am weitesten axial stromaufwärtig gelegenen Turbinenrotors bei einer Höchstleistungsbedingung des Gasturbinentriebwerks, mindestens 1800 K beträgt; **dadurch gekennzeichnet, dass**

die zweite Turbine (17) erste und zweite Rotorlaufschaufel- und Statorleitschaufelreihen umfasst, wobei die am weitesten axial stromaufwärtig gelegene Reihe von Statorleitschaufeln (171) und Rotorlaufschaufeln (172) der zweiten Turbine (17) metallen sind, während die am zweitweitesten axial stromaufwärtig gelegene Reihe von Statorleitschaufeln (173) und Rotorlaufschaufeln (174) der zweiten Turbine (17) unter Verwendung von Keramikmatrixverbundstoffen (CMC) hergestellt sind.

2. Gasturbinentriebwerk nach Anspruch 1, wobei das Kühl- zu Nebenstromeffizienzverhältnis im Bereich von 0,005 bis 0,02 liegt.

3. Gasturbinentriebwerk nach Anspruch 1 oder Anspruch 2, wobei die Masse von Keramikmatrixverbundstoff in der zweiten Turbine im Bereich von 2% bis 15 % der Gesamtmasse der zweiten Turbine liegt.

4. Gasturbinentriebwerk (10) für ein Luftfahrzeug nach einem der vorhergehenden Ansprüche, wobei:
die erste Turbine mindestens eine Komponente aus Keramikmatrixverbundstoff umfasst.

5. Gasturbinentriebwerk (10) nach einem der vorhergehenden Ansprüche, wobei:

die zweite Turbine (17) mindestens zwei Reihen Rotorlaufschaufeln (172) umfasst, wobei die am weitesten axial stromaufwärtig gelegene Reihe Rotorlaufschaufeln radial durch Dichtungssegmente (175) umgeben ist; und
die Dichtungssegmente einen Keramikmatrixverbundstoff umfassen.

6. Gasturbinentriebwerk (10) für ein Luftfahrzeug nach Anspruch 1, wobei:
die am zweitweitesten axial stromaufwärtig gelegene Reihe von Rotorlaufschaufeln der zweiten Turbine (17) radial durch Dichtungssegmente aus Keramikmatrixverbundstoff umgeben ist.

7. Gasturbinentriebwerk nach einem der vorhergehenden Ansprüche, wobei die Turbineneintrittstemperatur mindestens 1850 K beträgt.

8. Gasturbinentriebwerk nach einem der vorhergehenden Ansprüche, wobei:
der Fandurchmesser im Bereich von 250 cm bis 280 cm liegt.

**Revendications**

1. Moteur à turbine à gaz (10) pour un aéronef, comprenant :
un noyau de moteur (11) comprenant :

une turbine (17, 19), une chambre de combustion (16) et un compresseur (14, 15), la turbine comprenant une première turbine (19) et une seconde turbine (17) et le compresseur comprenant un premier compresseur (14) et un second compresseur (15) ;
un premier arbre de noyau (26) reliant la première turbine au premier compresseur ;
un second arbre de noyau (27) reliant la seconde turbine au second compresseur, la seconde turbine, le second compresseur et le second arbre de noyau étant agencés pour tourner à une vitesse de rotation supérieure à celle du premier arbre de noyau, le moteur à turbine à gaz comprenant en outre :

un conduit de dérivation radialement vers l'extérieur du noyau de moteur ;
une soufflante (23) comprenant une pluralité de pales de soufflante ; et
une boîte d'engrenages (30) qui reçoit une entrée en provenance du premier arbre de noyau (26) et délivre en sortie l'entraînement à la soufflante de façon à entraîner la soufflante à une vitesse de rotation inférieure à celle du premier arbre de noyau, et

une partie du flux (C) qui entre dans le coeur de moteur contournant la chambre de combustion et étant utilisée en tant que flux de refroidissement de turbine pour refroidir la turbine ;

le diamètre de soufflante étant compris dans la plage allant de 225 cm à 400 cm ;

en conditions de croisière, le rapport d'efficacité du flux de refroidissement sur le flux de dérivation défini comme le rapport du débit massique du flux de refroidissement de turbine sur le débit massique du flux de dérivation dans les conditions de croisière du moteur n'étant pas supérieur à 0,02 ; et

la température d'entrée de turbine, définie comme la température à l'entrée du rotor de turbine le plus axialement en amont dans une condition de puissance maximale du moteur à turbine à gaz, étant supérieure ou égale à 1 800 K ; **caractérisé en ce que**

la seconde turbine (17) comprend des première et seconde rangées de pales de rotor et d'aubes de stator, ladite rangée d'aubes de stator (171) et de pales de rotor (172) la plus axialement en amont de la seconde turbine (17) étant métalliques, tandis que la seconde rangée d'aubes de stator (173) et de pales de rotor (174) la plus axialement en amont de la seconde turbine (17) sont fabriquées à l'aide de composites à matrice céramique (CMC).

2. Moteur à turbine à gaz selon la revendication 1, ledit rapport d'efficacité du refroidissement sur la dérivation étant compris dans la plage allant de 0,005 à 0,02.

3. Moteur à turbine à gaz selon la revendication 1 ou la revendication 2, ladite masse du composite à matrice céramique dans la seconde turbine étant comprise dans la plage allant de 2 % à 15 % de la masse totale de la seconde turbine.

4. Moteur à turbine à gaz (10) pour un aéronef selon l'une quelconque des revendications précédentes, ladite première turbine comprenant au moins un composant en composite à matrice céramique.

5. Moteur à turbine à gaz (10) selon l'une quelconque des revendications précédentes,

ladite seconde turbine (17) comprenant au moins deux rangées de pales de rotor (172), la rangée de pales de rotor la plus axialement en amont étant entourée radialement par des segments d'étanchéité (175) ; et

lesdits segments d'étanchéité comprenant un composite à matrice céramique.

6. Moteur à turbine à gaz (10) pour un aéronef selon la revendication 1, ladite seconde rangée de pales de rotor la plus axialement en amont de la seconde turbine (17) étant entourée radialement par des segments d'étanchéité de composite à matrice céramique.

7. Moteur à turbine à gaz selon l'une quelconque des revendications précédentes, ladite température d'entrée de turbine étant supérieure ou égale à 1 850 K.

8. Moteur à turbine à gaz selon l'une quelconque des revendications précédentes, ledit diamètre de soufflante étant compris dans la plage allant de 250 cm à 280 cm.

**Fig. 1**

**Fig. 2**

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014283500 A
- US 2018119619 A
- EP 3354889 A
- US 2012301312 A
- US 2016215645 A
- US 2016186583 A
- US 2013224049 A